# EUROPEAN PATENT APPLICATION

(11) **EP 1 758 008 A2**
(43) Date of publication of application: **28.02.2007**
(21) Application number: 06119443.7
(22) Date of filing: 24.08.2006
(51) Int. Cl.: G05D 23/19

(54) **Electronic device to control a conditioning apparatus of a fluid**

(30) Priority: 25.08.2005 IT UD20050136
(71) Applicant: Criotherm Engineering Srl, 31044 Montebelluna (TV) (IT)
(72) Inventor: Callino, Fabrizio, 31035, Crocetta del Montello (TV) (IT); Sartor, Gianluca, 31040, Volpago del Montello (TV) (IT)
(74) Representative: Petraz, Gilberto Luigi

(57) **Abstract**

Electronic device (10) to control a conditioning apparatus (12) of a fluid having at least an electric motor (16, 17) able to generate at least a flow of fluid, and regulation elements (21, 39, 40) able to modify the temperature of the fluid. The electronic device (10) comprises a container (11) of limited size, for example 16 cm x 9 cm x 5.8 cm, inside which are disposed: a command and control unit, able to selectively generate a plurality of command and control signals for the electric motor (16, 17) and for the regulation elements (21, 39, 40); and actuation elements (23) able to receive the command and control signals from the command and control unit (22) and to generate corresponding actuation signals for the electric motor (16, 17) and for the regulation elements (21, 39, 40).

## Description

### FIELD OF THE INVENTION

The present invention concerns an electronic control device, of the compact type, to selectively control and regulate the functioning parameters of an apparatus for the conditioning of a fluid, such as for example, a heat regenerator or other apparatuses to take in and circulate the air in closed environments.

### BACKGROUND OF THE INVENTION

Apparatuses for conditioning a fluid are known, for example installed in plants to take in and circulate the air in smoking rooms in public buildings.

Such apparatuses, also known as "heat regenerators", normally comprise an intake pipe, in which an intake ventilator is provided, motorized by a relative electric motor to generate a first flow of air towards the outside of the environment, and a pipe to introduce air, in which an introduction ventilator is provided, motorized by a relative electric motor to generate a second flow of air towards the inside of the environment.

Such apparatuses also comprise a heat exchanger which allows heat exchange between said two flows of air, so that the air which is introduced inside the environment has a temperature close to that of the expelled air, irrespective of the outside temperature.

It is known that to selectively control and regulate the functioning parameters of such air conditioning apparatuses, devices are used that comprise a command and control unit which allows the user, by means of buttons or switches, to switch the motors on or off, and/or to select different functioning modes of the heat exchanger, and actuation means, or power means, which allow to regulate, according to pre-established parameters, the functioning speed of the motors, and possibly to use the heat exchanger in a different way, depending on the type of functioning mode selected by the user.

In the state of the art, the command and control unit and the actuation means of known devices are normally separated from each other and mounted in a large command panel, that is, in the order of tens of centimeters, disposed in a zone easily accessible for the user, but distant from the conditioning apparatus.

However, this known solution entails the need to provide a plurality of electric cables both inside the control panel to connect the command and control unit and the actuation means, and also to connect the control panel to the conditioning apparatus, with a consequent increase in bulk and the costs of production and installation.

This disadvantage is even more obvious when several command and control units are provided, with relative containers, distributed in several points of the environment to be conditioned.

Moreover, the disposition and connection of the command and control unit and the actuation means, in the state of the art, entails the need for the intervention of specialized manpower in order to set or modify the functioning parameters of the motors and/or the heat exchanger, depending on specific conditioning requirements.

A purpose of the present invention is to achieve a control device for conditioning apparatuses which is of limited size, simple, reliable and inexpensive, which does not need external electric cables between the command and control unit and the actuation means, and which allows the user himself to regulate the functioning parameters of the motors and/or the heat exchanger, depending on his own specific requirements, without needing the intervention of specialized manpower.

The Applicant has devised, tested and embodied the present invention to overcome the shortcomings of the state of the art and to obtain these and other purposes and advantages.

### SUMMARY OF THE INVENTION

The present invention is set forth and characterized in the main claim, while the dependent claims describe other characteristics of the invention or variants to the main inventive idea.

In accordance with the above purpose, a device according to the present invention is able to control an apparatus for conditioning a fluid, for example air, of the type having at least an electric motor able to generate at least a flow of fluid, for example from the outside to the inside of a closed environment, and regulation means that can modify the temperature of the fluid, for example according to a desired temperature present inside the closed environment.

According to a characteristic feature of the present invention, the device comprises a container, preferably of standardized and limited shape and size, advantageously in the order of some centimeters, and having a capacity of less than 1.000 cm³, inside which are disposed: a command and control unit able to selectively generate a plurality of command and control signals for the electric motor and for the regulation means, and hence to set, according to the choice of the user, the delivery and temperature of the fluid; and actuation means to automatically actuate the functioning parameters of the electric motor and the regulation means, according to the command and control signals generated by the command and control unit.

Advantageously, the command and control unit and the actuation means are mounted on a single electronic card.

In this way, complex electric cables are not necessary, either inside the container, to connect the command and control unit and the actuation means, or outside, to connect the latter to the components of the conditioning apparatus, thus reducing the times and costs of production and installation, and also the costs of subsequent maintenance.

According to a preferential form of embodiment of the present invention, the command and control unit is associated, directly or remote, with or without wires, with a command member, such as a keyboard or a console of keys and/or buttons, which allows the user to selectively set functioning parameters which generate the command and control signals, so as to be able to regulate the flow and temperature of the fluid as desired.

In a preferential form of embodiment of the present invention, sensor means are provided able to detect constantly, or at regular intervals, at least the data of the temperature and delivery of the flow, and to send said data to the command and control unit. In this way, the command and control unit compares the data detected with those set, and signals any difference to the actuation means, which if necessary corrects the functioning parameters of the motor and of the regulation means.

This solution allows to set the functioning parameters of the conditioning apparatus manually, according to specific requirements and without needing the intervention of specialized manpower.

### BRIEF DESCRIPTION OF THE DRAWINGS

These and other characteristics of the present invention will become apparent from the following description of a preferential form of embodiment, given as a non-restrictive example with reference to the attached drawings wherein:

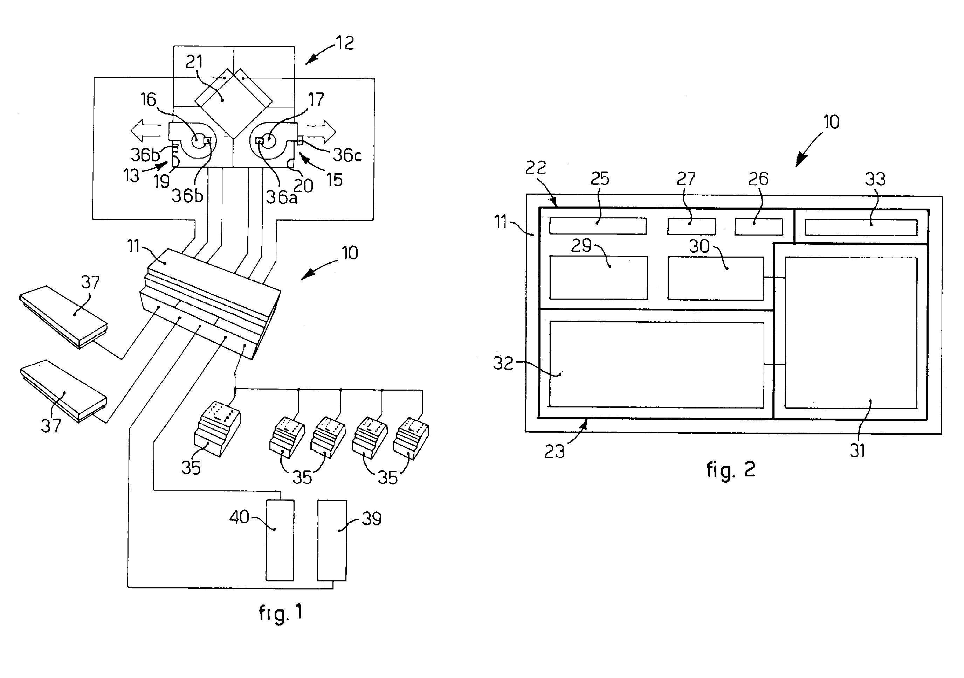

- fig. 1 is a schematic view of a device according to the present invention, applied to an apparatus for conditioning a fluid of a known type;
- fig. 2 is a schematic view from above of an electronic circuit mounted inside the device in fig. 1.

### DETAILED DESCRIPTION OF A PREFERENTIAL FORM OF EMBODIMENT

With reference to the attached drawings, a device 10 according to the present invention comprises a container 11 of very limited size, for example 16 cm x 9 cm x 5.8 cm, of the type easily found on the market, which is associated with an air conditioning apparatus of a known type, in this case a ventilation plant 12, or heat regenerator, for a smokers' room.

Simply to give an example, the ventilation plant 12 comprises two ventilation units 13 and 15 associated with respective electric motors 16 and 17 and disposed respectively in correspondence with an intake pipe 19 and an introduction pipe 20, so as to take in the stale air present inside the environment and introduce into the environment clean air taken from outside.

The ventilation plant 12 also comprises a heat exchange unit 21, interposed between the intake pipe 19 and the introduction pipe 20, so that the air taken in gives up or receives heat to/from the air introduced, in order to regulate the temperature of the latter and take it to a value substantially close to that of the air taken in. The heat exchange unit 21 is also of a known type and therefore is not described in detail here.

To be more exact, inside the container 11 are disposed: a command and control unit 22, able to selectively generate at least the functioning parameters of the electric motors 16 and 17 according to the parameters of temperature and flow delivery set by the user; and actuation means 23, which actuates and regulates the functioning of the electric motors 16 and 17, according to the programmed functioning parameters generated by the command and control unit 22.

The command and control unit 22 comprises a plurality of electronic stations connected with each other, of a substantially known type and not described in detail here.

In this case, the command and control unit 22 comprises a data input station 25, a bus data communication station 26, a configuration and settings station 27, a processing station 29 and a signal conditioning station 30.

The actuation means 23 substantially comprises a power unit 32, for example consisting of a plurality of relays able to command and regulate the feed power of the electric motors 16 and 17 and of the heat exchange unit 21.

In this case, inside the container 11 are also provided:
a feed and filter unit 31 which feeds electrically, and with different tensions, the command and control unit 22 and the actuation means 23; a data output station 33 which allows to connect the container 11 with an analogous container, or other external electronic apparatus, not shown here, such as for example a personal computer, a printer, a memory or other.

The device 10 according to the present invention also comprises one or more command push-button panels 35, in this case five, connected through the bus data communication station 26 to the command and control unit 22, and distributed as desired inside the environment to be conditioned.

The command push-button panels allow the user to set manually, by inputting and/or selecting, the functioning parameters of every individual electric motor 16, 17.

Thanks to the disposition inside the container 11 of the command and control unit 22, each command push-button panel 35 has relatively smaller sizes than in the state of the art, and the connection to the bus data communication station 26 is effected with a single cable, for example a network cable, without needing particular cables.

Alternatively, given the limited size of the command push-button panel 35, the parameters set manually by the user are communicated to the command and control unit 22 with a so-called remote, or "wireless", transmission, for example by means of radio waves, infrared rays, Bluetooth® technology, or other.

The device 10 according to the invention also advantageously comprises a plurality of sensors, denoted generally by the reference numbers 36a, 36b and 36c, which consist of pressure switches and thermometers and are able to detect the actual functioning of the electric motors 16 and 17, the actual passage of air through the intake pipe 19, and the temperature of the air both at inlet and at outlet from the introduction pipe 20, in order to control the so-called anti-freeze and free cooling functions.

The detections made by the sensors 36a, 36b and 36c can be carried out without distinction either continuously or at pre-defined regular intervals.

The data detected by the three sensors 36a, 36b and 36c are compared by the processing station 29 with the values set by the user through the command push-button panel 35. Any possible discrepancy between the data is communicated to the actuation means 23, which provides if necessary to automatically modify the functioning parameters of the electric motors 16 and 17, to keep the data measured within a desired field of tolerance with respect to the set data.

In this case, two or more signaling lamps 37 are associated with the device 10 according to the present invention; they are commanded by the command and control unit 22 and are able to signal visually both that the ventilation plant 12 is switched on and also that it is functioning correctly, according to the data detected by the sensors 36a, 36b and 36c.

The device 10 is also able to be connected to a temperature correction unit, consisting for example of a heat exchanger of an electric type 39 and/or a heat exchanger using water 40. In this case, the command and control unit 22 and the actuation means 23 are able to control and command the temperature correction unit too.

It is clear, however, that modifications and/or additions of parts may be made to the device 10 as described heretofore, without departing from the field and scope of the present invention.

For example, it comes within the field of the present invention to provide that the command push-button panel 35 is also integrated into the container 11.

According to another variant, the command push-button panel comprises a monitor, to display both the set data and also the data detected by the sensors 36a, 36b and 36c.

It is also clear that, although the present invention has been described with reference to specific examples, a person of skill in the art shall certainly be able to achieve many other equivalent forms of device to control an apparatus for conditioning a fluid, having the characteristics as set forth in the claims and hence all coming within the field of protection defined thereby.

## Claims

1. Electronic device to control a conditioning apparatus (12) of a fluid having at least an electric motor (16, 17) able to generate at least a flow of said fluid, and regulation means (21, 39, 40) able to modify the temperature of said fluid, **characterized in that** it comprises a container (11) of limited size, inside which are disposed: a command and control unit (22), able to selectively generate a plurality of command and control signals for said electric motor (16, 17) and for said regulation means (21, 39, 40); and actuation means (23) able to receive said command and control signals from said command and control unit (22) and to generate corresponding actuation signals for said electric motor (16, 17) and for said regulation means (21, 39, 40).

2. Device as in claim 1, **characterized in that** said command and control unit (22) comprises at least a command member (35) able to allow the user to selectively set functioning parameters which generate said command and control signals, in order to regulate as desired the flow and temperature of said fluid.

3. Device as in claim 2, **characterized in that** said command member (35) is disposed remote from said container (11).

4. Device as in claim 2, **characterized in that** said command member (35) is integrated into said container (11).

5. Device as in any claim hereinbefore, **characterized in that** said command and control unit (22) comprises a data input station (25), a bus data communication station (26), a configuration and settings station (27), a processing station (29) and a signal conditioning station (30).

6. Device as in any claim hereinbefore, **characterized in that** said actuation means (23) comprises a power unit (32) able to selectively actuate said electric motor (16, 17) and said regulation means (39-40).

7. Device as in any claim hereinbefore, **characterized in that** it also comprises sensor means (36a, 36b, 36c) able to detect the data of at least the delivery and temperature of said flow of fluid and to send said detected data to said command and control unit (22).

8. Device as in claim 7, **characterized in that** it also comprises at least two signaling lamps (37), commanded by said command and control unit (22), and able to signal visually at least that the conditioning apparatus (12) is switched on and functioning correctly, according to the data detected by said sensor means (36a, 36b, 36c).

9. Device as in any claim hereinbefore, **characterized in that** at least a feed and filtering unit (31) is provided in said container (11), able to feed electrically, with different tensions, said command and control unit (22) and said actuation means (23).

10. Device as in any claim hereinbefore, **characterized in that** a data output station (33) is also provided in said container (11), able to connect said container (11) with another container (11) or other electronic apparatuses.

11. Device as in any claim hereinbefore, **characterized in that** the sizes of said container (11) are in the order of centimeters.

12. Device as in any claim hereinbefore, **characterized in that** said command and control unit (22) and said actuation means (23) are mounted on a single electronic card.

13. Device as in any claim hereinbefore, **characterized in that** said container (11) has dimensions in the order of some centimeters and a capacity of less than 1.000 cm³.

14. Device as in claim 13, **characterized in that** said dimensions of said container (11) are about 16 cm x 9 cm x 5.8 cm.
